# EUROPÄISCHE PATENTSCHRIFT

(11) **EP 2 090 508 B1**
(45) Veröffentlichungstag und Bekanntmachung des Hinweises auf die Patenterteilung: **19.12.2012**
(21) Anmeldenummer: 09000344.3
(22) Anmeldetag: 13.01.2009
(51) Int. Cl.: B63H 23/24, H02J 5/00, B63H 21/17, H02J 9/00

(54) **Elektrisches Energieversorgungssystem, insbesondere für Schiffe**
Electric energy supply system, in particular for ships
Système d'alimentation en énergie électrique, notamment pour bateaux

(30) Priorität: 16.01.2008 DE 102008004593
(43) Veröffentlichungstag der Anmeldung: 19.08.2009
(73) Patentinhaber: Andersen, Peter, 21075 Hamburg (DE)
(72) Erfinder: Andersen, Peter, 21075 Hamburg (DE); Buchloh, Heiko, 53572 Unkel (DE)
(74) Vertreter: Lelgemann, Karl-Heinz

(56) Entgegenhaltungen:
- DE-A1-102006 024 594
- FR-A- 578 244

## Beschreibung

Die Erfindung betrifft ein elektrisches Energieversorgungssystem, insbesondere für Schiffe, mit von Dieselmotoren angetriebenen Generatoren und mit Verbrauchern, wobei ein Gleichspannungszwischenkreis als Energiebus zwischen den Verbrauchern und den Generatoren angeordnet ist und wobei Umrichter zur Versorgung der Verbraucher mit Wechselspannung vorgesehen sind.

Schiffe mit Elektroantrieben sind bekannt; da sie gegenüber Schiffen mit Diesel-Direktantrieben in der Regel höhere Investitionskosten aufweisen, werden E-Antriebe nur für Schiffe eingesetzt, bei denen die Kostennachteile durch Vorteile im Betrieb aufgewogen werden. Derartige Vorteile im Betrieb sind beispielsweise bessere Manövrierbarkeit, verglichen mit den Schiffen mit Diesel-Direktantrieb und herkömmlichen Ruderanlagen oder eine höhere Betriebssicherheit durch mehrfach redundante Ausbildung der Antriebseinheiten und der Energieerzeugungseinheiten für die Antriebseinheiten.

Das Dokument DE 10 2006 024594, das als nächstligender Stand der Technik angesehen wird, beschreibt ein System dieser Gattung.

Es ist insbesondere Aufgabe der Erfindung, ein elektrisches Energieversorgungssystem für Schiffe, insbesondere für Flusskreuzfahrtschiffe oder große Yachten, anzugeben, das einen besonders wirtschaftlichen Betrieb insbesondere durch eine automatische Verbrauchsoptimierung der jeweils in Betrieb befindlichen Diesel-Generatorsätze auf besonders einfache und sichere Art ermöglicht. Dabei soll auch eine Ausbildung angegeben werden, die besonders Platz sparend ist, d.h. für das Fahr- und Bordnetz wird keine Drehstrom-Verteilanlage in einem Schaltschrank benötigt. Dabei sollen die Diesel-Generatorsätze auf Knopfdruck ein- oder ausgeschaltet werden können.

Aus der DE 10 2004 034 936 A1 und aus der DE 10 2006 024 594.6 ist ein Fahr- und Bordnetz zum Versorgen elektrischer Verbraucher mit Energie an Bord von Schiffen angegeben, das einen Gleichspannungszwischenkreis für die Energieversorgung der Antriebseinheiten aufweist. Der Aufbau dieser bekannten Fahr- und Bordnetze an Bord eines Schiffes ist jedoch nicht besonders einfach und kostengünstig und es ist Aufgabe der Erfindung, ein Fahr- und Bordnetz anzugeben, das besonders einfach und kostengünstig ausgebildet ist. Gleichzeitig soll es eine erhöhte Redundanz ermöglichen und insbesondere an die Bedingungen eines Flusskreuzfahrtschiffes mit seiner großen Länge angepasst sein.

Ein modernes Flusskreuzfahrtschiff ist über 100 Meter lang und weist kleinere elektrische Antriebseinheiten im Bug sowie größere Antriebseinheiten im Heck auf. Ein derartiges Schiff soll jederzeit im Verbrauchsoptimum für den benötigten Treibstoff betrieben werden und alle Vorteile eines elektrisch angetriebenen Schiffs mit den im Schiff verteilten Diesel- und ggf. auch Gasturbinen-Generatorsätzen bieten.

Die Aufgabe wird dadurch gelöst, dass die Generatoren als Asynchrongeneratoren ausgebildet sind, dass zwischen den Generatoren und einem Gleichspannungszwischenkreis bidirektional arbeitende Stromrichter angeordnet sind und dass die bidirektional arbeitenden Stromrichter mindestens einen Kondensator aufweisen, mit dessen gespeicherter Energie der zugehörige Asynchrongenerator beim Start auferregt wird.

Die Aufgabe wird weiterhin vorteilhaft dadurch gelöst, dass der Energiebus für das Schiff als Gleichspannungs-Energiebus ausgebildet ist und dass die sich im Betrieb einstellenden Spannungsänderungen als Steuergröße für die Generatorleistungen dienen.

Der Gleichspannungs-Energiebus stellt einen Gleichspannungszwischenkreis dar. Erfindungsgemäß wird höchst vorteilhaft die Spannungsänderung im Zwischenkreis als Steuergröße für die Generatorleistungen gewählt. So ergibt sich ein mit der Regelung eines Wechselspannungsnetzes vergleichbares Verhalten, mit dem zuverlässig verhindert werden kann, dass Generatorleistung zu hoch angefordert und damit Energie verschwendet wird. Gleichzeitig wird auch verhindert, dass es zu einem Zusammenbruch des Bordnetzes kommen kann. In jedem Fall wird die Generatorleistung der Energieanforderung automatisch angepasst.

In vorteilhafter Ausgestaltung der Erfindung ist vorgesehen, dass einzelne Generatoren in Bezug auf ihre Leistung über unterschiedliche Füllung der Dieselmotoren eingestellt werden und die Gesamtleistung über die Zahl der in Betrieb befindlichen Dieselmotoren eingestellt wird. So ergibt sich die Möglichkeit, die einzelnen Dieselmotoren mit ihren Generatoren im jeweiligen Verbrauchsoptimum zu betreiben. Die Dieselmotoren, die für die momentane Energieanforderung nicht benötigt werden, können abgeschaltet werden.

Es ist weiterhin vorteilhaft vorgesehen, dass dem Gleichspannungs-Energiebus Elektroenergie über eine Kombinationseinheit einer Halbleiter-Schalteinrichtung mit mechanischen Schaltelementen, die eine galvanische Trennung zu den Generatoren oder den Antriebsmotoren gewährleisten können, zugeführt oder entnommen wird. So ergibt sich eine sichere Netzgestaltung mit dem besonderen Vorteil, dass auf die bisher bei Schiffen verwendeten, kostenaufwändigen und Platz in Anspruch nehmenden Schaltschränke und Schaltanlagen verzichtet werden kann. Durch die galvanische Trennung ist es vorteilhaft möglich, die einzelnen Teile des Bordnetzes unbeeinflusst von den anderen Teilen zu regeln und zu steuern.

Es ist fernerhin vorteilhaft vorgesehen, dass die Generatoren über Gleichspannungszwischenkreis-Umrichter mit IGBT-Schalteinrichtungen mit dem Zwischenkreis verbunden sind, wobei insbesondere vorgesehen ist, dass die Gleichspannungszwischenkreis-Umrichter Leistungskondensatoren aufweisen, die den nötigen Erregerstrom für Asynchrongeneratoren liefern, wobei Gruppen von Gleichspannungszwischenkreis-Umrichtern zusammenschaltbar ausgebildet sind. So entstehen vorteilhaft sog. E-Power-Packs, die einen Erregerstrom zuverlässig liefern, sobald der Asynchrongenerator vom Diesel angetrieben wird und der entsprechende Umrichter in Betrieb ist.

Die Motoren und Generatoren auf dem Schiff sollen Asynchronmaschinen sein. Dies ist eine besonders kostengünstige und robuste Ausführung für die elektrischen Maschinen. Die Unterschiede der Asynchronmaschinen gegenüber Synchronmaschinen in Bezug auf das elektrische Netz werden sehr vorteilhaft durch die Umrichter ausgeglichen.

Es ist vorteilhaft vorgesehen, dass die Spannungszwischenkreis-Umrichter für die E-Energieerzeugerseite digitale Regelbausteine aufweisen, die eine Parametrierung für Konstantspannungsgeneratoren und/oder Asynchrongeneratoren aufweisen.
So können einheitliche, kostengünstige Spannungszwischenkreis-Umrichter verwendet werden.

Es ist weiterhin vorgesehen, dass an dem Gleichspannungs-Energiebus Stromrichter, vorzugsweise mit IGBT-Schaltern sowie Spannungs- und Frequenz-Controllern angeordnet sind, die eine Selbstführung ermöglichen. Dies ermöglicht vorteilhaft eine automatische Anpassung der Stromrichter an den Gleichspannungs-Energiebus.

Es ist weiterhin vorteilhaft vorgesehen, dass das Schiff einen Gleichspannungszwischenkreis aufweist, der als ein durch Halbleiterschalter auftrennbarer Gleichspannungs-Energiebus ausgebildet ist und vom Bugbereich bis zum Heckbereich des Schiffes verläuft, wobei in dem Gleichspannungs-Energiebus zumindest ein, vorzugsweise zwei, Transistorschalter angeordnet sind, mit denen der Gleichspannungs-Energiebus auftrennbar ist. So ist es einfach möglich, Bug- und Heckantriebsgruppen zu bilden und voneinander zu trennen sowie je nach Anforderung separat zu betreiben. So wird die Sicherheit des Antriebs erhöht, wobei diese Sicherheit noch durch den Einsatz eines Notstrom-Generators erhöht werden kann, der sowohl an den vorderen als auch an den hinteren Teil des Gleichspannungs-Energiebus anschließbar ist. Das Gleiche gilt für einen Landanschluss, der die Energieversorgung des Schiffes während der Liegezeiten übernimmt. Auch dieser ist, ebenso wie der Notstrom-Generator, über Stromrichter an den Gleichspannungs-Energiebus angebunden.

Es ist dabei vorteilhaft vorgesehen, dass das Schiff zumindest einen Landanschluss aufweist, der über einen Spannungszwischenkreis-Umrichter mit IGBT-Schaltern sowie Spannungs-und Frequenz-Controllern verfügt und als selbstgeführter Umrichter ausgebildet ist.

Weiterhin ist vorgesehen, dass es einen unabhängigen Notstromgenerator aufweist, der von einem Dieselmotor angetrieben wird und über zumindest einen Spannungszwischenkreis-Umrichter an den Gleichspannungs-Energiebus angeschlossen ist. So ergibt sich eine insgesamt sehr variable und sehr sichere Energieversorgung für das erfindungsgemäße Schiff.

Die Regelung der Antriebe kann vorteilhaft ebenfalls variabel ausgestaltet werden. Dafür ist vorgesehen, dass die Spannungszwischenkreis-Umrichter der Antriebe digitale Regelbausteine aufweisen, die eine Parametrierung für eine Drehmomenten- oder Drehzahlregelung aufweisen. eine Drehmomentenregelung ist häufig vorteilhafter für Heckantriebe, während vorhandene Bugantriebe einfach drehzahlgeregelt betrieben werden können.

In Ausgestaltung des Schiffes ist weiterhin vorgesehen, dass die Dieselmotoren von der Brücke eines Schiffes aus fernbedienbar (Start, Stopp, Leistung) sind, und die Gleichspannungszwischenkreis-Umrichter selbsttätig arbeiten. So kann der diensthabende Offizier auf der Brücke die gesamte Maschinenanlage einfach selbst steuern. Maschinenpersonal ist nicht notwendig.

Für die Versorgung der verschiedenen Verbraucher im Schiff ist vorgesehen, dass an den Gleichspannungs-Energiebus über Stromrichter Unterverteilungen für das Bordnetz angeschlossen sind. So entfallen auch für das Bordnetz die üblichen Schalteinrichtungen und es brauchen sehr vorteilhaft nur Sicherungen vorgesehen werden. So wird der Platzbedarf für die E-Anlagen eines Schiffes vorteilhaft noch weiter verringert.

Es ist erfindungsgemäß vorgesehen, dass das Schiff insbesondere ein Flusskreuzfahrtschiff oder eine Yacht ist. Hier kommen die Vorteile des Gleichspannungs-Energiebus und der selbstgeführten Umrichter in Verbindung mit dem Fortfall von Schaltschränken besonders zur Geltung. Diese Vorteile ergeben sich insbesondere für Motoryachten oder ähnliche Schiffe, d.h. für alle Schiffe, die Fahrprofile mit erheblich unterschiedlichen Geschwindigkeiten über längere Zeiträume aufweisen und mit wenig Personal operieren sollen.

Die Erfindung wird anhand von Zeichnungen näher erläutert, aus denen, ebenso wie aus den Unteransprüchen, auch weitere erfinderische Einzelheiten entnehmbar sind.

### Im Einzelnen zeigen:

- Figur 1: ein schematisiert wiedergegebenes Schiffsnetz sowie
- Figur 2: die generelle Anordnung der einzelnen Antriebs-, Energieerzeugungs- und -verteilungskomponenten im Schiff.

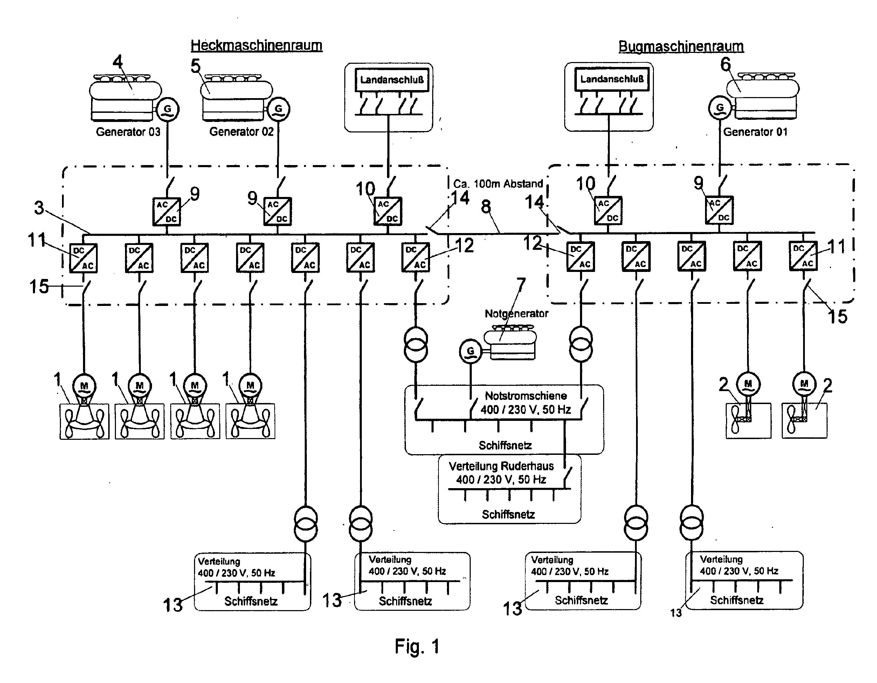

In Figur 1 bezeichnet 1 Heckantriebe, in diesem Beispiel vier, und 2 die Bugantriebe, in diesem Beispiel zwei. Als Heckantriebe dienen spezielle mechanische POD's, die bei einem hohen Wirkungsgrad einen guten Schub aufweisen, da sie als Twin-Propeller-Einheiten ausgebildet sind. Die Antriebe 2 im Bug sind bekannte Pump-Jets, die nach dem Prinzip eines Waterjets funktionieren und sowohl als Bugstrahlruder als auch als Bugantriebe dienen können. Als Bugantriebe können sie allein den Vortrieb des Schiffes übernehmen, falls die Heckantriebe ausfallen.

Mit 3 ist ein Gleichspannungs-Energiebus bezeichnet, der die einzelnen Umrichter für die Energieerzeugung, der Antriebe und der Bordnetzversorgung im E-Power-Pack miteinander verbindet. Mit 8 ist ein Gleichspannungs-Energiebus bezeichnet, der sich vom Bug bis zum Heck durch das Schiff erstreckt, bis über 100 Meter lang sein kann und die E-Power-Packs miteinander verbindet. Zum Trennen der E-Power-Packs im Bug- und Heckteil im Störfall sind Transistorschalter 14 an den Enden des Gleichspannungs-Energiebus 3 vorgesehen.
In den Gleichspannungs-Energiebus 3 speisen Diesel-Generatorsätze 4, 5 und 6 sowie ggf. ein Notstrom-Dieselgeneratorsatz 7 Elektroenergie ein. Diese speist sowohl die Antriebe 1 und 2 als auch Unterverteilungen 13 als Bordnetz. Der Gleichspannungs-Energiebus 3 wird von eingangsseitigen Stromrichtern 9 der Generatoren sowie ggf. dem Stromrichter 10 des Landanschlusses mit Elektroenergie versorgt, die unabhängig von dem eingangsseitigen Zustand wie Spannungshöhe und Frequenz passend an den Gleichspannungs-Energiebus 3 übergeben wird.

Die notwendigen Regelkomponenten der Stromrichter sind aus der DE 10 2006 024 594.6, die bereits als Stand der Technik genannt ist, zu ersehen.

Ausgangsseitig befinden sich an dem Gleichspannungs-Energiebus Stromrichter 11, 12, die sowohl das Bordnetz als auch die Antriebe mit Elektroenergie versorgen. Die Stromrichter sind mit Schaltern kombiniert. Über die Stromrichter mit Schaltern sind der Gleichspannungs-Energiebus 3 und die einzelnen Abzweige, z.B. zu dem Verteiler 13, sowie zu den Antrieben und Generatoren 1, 2, 4, 5, 6 und 7, galvanisch voneinander trennbar. Diese Einheiten können also unabhängig voneinander gesteuert und geregelt werden. Auch ein separates Abschalten ohne Beeinflussung des Fahrnetzes ist möglich.

Insgesamt ergibt sich ein in bisher unerreichter Weise flexibles und gleichzeitig gut optimierbares EnergieVersorgungssystem für ein Schiff, insbesondere ein Flusskreuzfahrtschiff. Es versteht sich, dass auch die Schalter, soweit nicht Sicherheitsanforderungen entgegenstehen, als Halbleiterschalter ausgebildet sind. Dies gilt auch für die Schalter 15, die beispielhaft gezeigt sind.

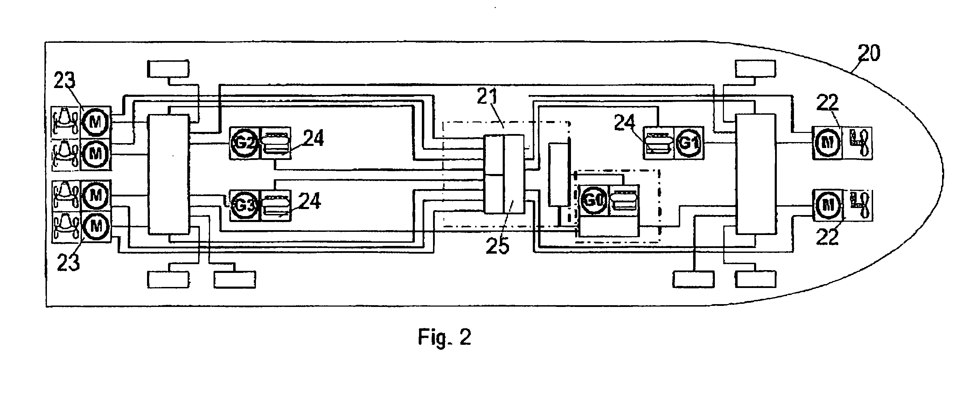

In Figur 2 ist mit 20 ein schematisch angedeuteter Schiffsrumpf bezeichnet, in dem sich die ebenfalls schematisch angedeuteten Antriebe 22 im Bug und 23 im Heck befinden. Weiterhin befinden sich im Schiffsrumpf Diesel-Generatorsätze 24. Im Oberteil des Schiffes befindet sich ein Brückenbereich 21. Der Brückenbereich 21 weist ein Steuerpult 25 auf, von dem Steuerleitungen zu den einzelnen Antriebsaggregaten, Generatoren etc. verlaufen. So ist die gesamte elektrische Ausrüstung des Schiffes von der Brücke aus steuerbar. Diese gilt insbesondere für die Ein- und Ausschaltung der Generatoren und Antriebe sowie ihre Leistungsregelung, so dass sich von der Brücke aus einfach ein Energie optimiertes Verhalten der Energieversorgung und der Verbraucher des Schiffes erreichen lässt.

Die Schalter, Stromrichter und auch die Fahranlage des Schiffes sind dabei in herkömmlicher Art und Weise ausgeführt, so dass die Ersatzteilversorgung einfach ist und den Vorteil bietet, dass an Bord des Schiffes Ersatzteile nur im reduzierten Umfang bevorratet werden müssen.

Da die Antriebe unter dem Rumpf angeordnet sind und Schaltschränke für eine Drehstromverteilung im Fahrnetz nicht benötigt werden, steht bis auf den Platz, den die im hinteren Teil des Rumpfes angeordneten Dieselgeneratorsätze benötigen, tatsächlich der gesamte Innenraum des Schiffes für Kabinen, Aufenthaltsräume und den Hotelbetrieb des Schiffes zur Verfügung. So wird eine optimale Raumausnutzung z.B. eines Flusskreuzfahrtschiffes erreicht, so dass sich zusammen mit der jederzeit vorhandenen und einfachen Möglichkeit der Energie-Verbrauchsoptimierung durch Anpassung der Generatorleistung an den Momentanverbrauch eine bisher unerreicht gute Wirtschaftlichkeit eines Schiffes, verbunden mit überlegenen Fahreigenschaften, ergibt. Dies gilt sowohl für kleine Kreuzfahrtschiffe als auch für Yachten und maritime Sonderfahrzeuge aller Art.

## Patentansprüche

1. Elektrisches Energievererguns system, insbesondere für Schiffe, mit von Dieselmotoren (4,5,6,7) angetriebenen Generatoren und
mit Verbrauchern, wobei ein Gleichspannungszwischenkreis als Energiebus (3) zwischen den Verbrauchern (1,2,13) und den Generatoren angeordnet ist und wobei Umrichter (11,12) zur Versorgung der Verbraucher mit Wechselspannung vorgesehen sind, **dadurch gekennzeichnet, dass** die Generatoren als Asynchrongeneraotren ausgebildet sind, dass zwischen den Generatoren und dem Gleichspannungszwischenkreis bidirektional arbeitende Stromrichter (9,10) angeordnet sind und, dass die bidirektional arbeitenden Stromrichter mindestens einen Kondensator aufweisen, mit dessen gespeicherter Energie der zugehörige Asynchrongenerator beim Start auferregt wird.

2. Elektrisches Energieversorgungssystem nach Anspruch 1,
**dadurch gekennzeichnet, dass** der E-Energiebus das gesamte Schiff (20) mit E-Energie versorgt und dass die sich im Betrieb einstellenden Spannungsänderungen in dem Gleichspannungs-Energiebus (3) als Steuergrößen für die Generatoren dienen.

3. Elektrisches Energieversorgungssystem nach Anspruch 1 oder 2, **dadurch gekennzeichnet, dass** einzelne Generatoren in Bezug auf ihre Leistung über unterschiedliche Füllung der Dieselmotoren (4, 5, 6) eingestellt werden und die Gesamtleistung über die Zahl der in Betrieb befindlichen Dieselmotoren (4, 5, 6) eingestellt wird.

4. Elektrisches Energieversorgungssystem nach Anspruch 1, 2 oder 3, **dadurch gekennzeichnet, dass** dem Gleichspannungs-Energiebus (3) Elektroenergie über Kombinationseinheiten einer Halbleiter-Schalteinrichtung mit mechanischen Schaltelementen (9), die eine galvanische Trennung zu den Generatoren oder den Antriebsmotoren (1, 2) gewährleisten können, zugeführt oder entnommen wird.

5. Elektrisches Energieversorgungssystem nach Anspruch 4, **dadurch gekennzeichnet, dass** die Generatoren über Gleichspannungszwischenkreis-Umrichter mit IGBT-Schalteinrichtungen (9) mit dem Zwischenkreis verbunden sind.

6. Elektrisches Energieversorgungssystem nach Anspruch 1, 2, 3, 4 oder 5, **dadurch gekennzeichnet, dass** die Gleichspannungszwischenkreis-Umrichter (9) Leistungskondensatoren aufweisen, die den nötigen Erregerstrom für Asynchrongeneratoren liefern, wobei Gruppen von Gleichspannungszwischenkreis-Umrichtern (9) zusammenschaltbar ausgebildet sind.

7. Elektrisches Energieversorgungssystem nach einem oder mehreren der Ansprüche 1 bis 6, **dadurch gekennzeichnet, dass** die Spannungszwischenkreis-Umrichter (9) für die E-Energieerzeugerseite digitale Regelbausteine aufweisen, die eine Parametrierung für Konstantspannungsgeneratoren und/oder Asynchrongeneratoren aufweisen.

8. Elektrisches Energieversorgungssystem nach einem oder mehreren der vorhergehenden Ansprüche, **dadurch gekennzeichnet, dass** an dem Gleichspannungs-Energiebus (3) Stromrichter, vorzugsweise mit IGBT-Schaltern, sowie Spannungs- und Frequenz-Controllern angeordnet sind, die eine Selbstführung ermöglichen.

9. Elektrisches Energieversorgungssystem nach einem oder mehreren der vorhergehenden Ansprüche, **dadurch gekennzeichnet, dass** es einen Gleichspannungszwischenkreis aufweist, der als ein durch Halbleiterschalter (14) auftrennbarer Gleichspannungs-Energiebus ausgebildet ist und vom Bugbereich bis zum Heckbereich des Schiffes verläuft.

10. Elektrisches Energieversorgungssystem nach Anspruch 9, **dadurch gekennzeichnet, dass** in dem Gleichspannungs-Energiebus (3) zumindest ein, vorzugsweise zwei, Transistorschalter (14) angeordnet sind, mit denen der Gleichspannungs-Energiebus (3) auftrennbar ist.

11. Elektrisches Energieversorgungssystem nach einem oder mehreren der vorhergehenden Ansprüche, **dadurch gekennzeichnet, dass** die Spannungszwischenkreis-Umrichter (11) digitale Regelbausteine aufweisen, die eine Parametrierung für eine Drehmomenten- oder Drehzahlregelung aufweisen.

12. Schiff mit einem elektrischen Energieversorgungssystem, nach einem oder mehreren der vorhergehenden Ansprüche, **dadurch gekennzeichnet, dass** es zumindest einen Landanschluss aufweist, der über einen Spannungszwischenkreis-Umrichter (9) mit IGBT-Schaltern sowie Spannungs- und Frequenz-Controllern verfügt und als selbstgeführter Umrichter ausgebildet ist.

13. Schiff mit einem elektrischen Energieversorgungssystem, nach einem oder mehreren der vorhergehenden Ansprüche, **dadurch gekennzeichnet, dass** es einen Notstromgenerator aufweist, der von einem Dieselmotor (7) angetrieben wird und über zumindest einen Spannungszwischenkreis-Umrichter an den Gleichspannungs-Energiebus (3) angeschlossen ist.

14. Elektrisches Energieversorgungssystem für ein Schiff, nach einem oder mehreren der vorhergehenden Ansprüche, **dadurch gekennzeichnet, dass** die Dieselmotoren (4, 5, 6, 7) von der Brücke (25) des Schiffes aus fernbedienbar (Start, Stopp, Leistung) sind, und die Gleichspannungszwischenkreis-Umrichter (9, 11) selbsttätig arbeiten.

15. Elektrisches Energieversorgungssystem nach einem oder mehreren der vorhergehenden Ansprüche, **dadurch gekennzeichnet, dass** an den Gleichspannungs-Energiebus (3) über Stromrichter (12) Unterverteilungen für das Bordnetz (13) angeschlossen sind.

16. Schiff mit einem elektrischen Energieversorgungssytem, nach einem oder mehreren der vorhergehenden Ansprüche 1 bis 15, **dadurch gekennzeichnet, dass** es ein Flusskreuzfahrtschiff ist.

17. Schiff mit einem elektrischen Energieversorgungssystem, nach einem oder mehreren der Ansprüche vorhergehenden 1 bis 15, **dadurch gekennzeichnet, dass** es eine Motoryacht oder ein yachtähnlicher Motorsegler ist.

18. Schiff mit einem elektrischen Energieversorgungssystem, nach einem oder mehreren der vorhergehenden Ansprüche 1 bis 15, **dadurch gekennzeichnet, dass** es ein Küstenwachboot oder ein Patrouillenboot ist.

19. Schiff mit einem elektrischen Energieversorgungssystem, nach einem oder mehreren der Ansprüche 1 bis 18, **gekennzeichnet durch** die Verwendung von selbstgeführten Gleichspannungszwischenkreis-Umrichtern (9, 10, 11, 12), die die Aufgaben einer Schalttafel für Elektroantriebe und Generatoren übernehmen.

## Claims

1. An electrical energy supply system, particularly for ships, with generators powered by diesel engines (4, 5, 6, 9) and with consumers, wherein a DC intermediate circuit as an energy bus (3) is disposed between the consumers (1, 2, 13) and the generators and wherein converters (11, 12) are provided to supply the consumers with AC voltage, **characterized in that** the generators are configured as asynchronous generators, that between the generators and the DC intermediate circuit are disposed bidirectional converters (9, 10) and that the bidirectional converters exhibit at least one capacitor with the stored energy of which the associated asynchronous generator is excited during starting.

2. The electrical energy supply system according to claim 1, **characterized in that** the electrical energy bus supplies the entire ship (20) with electrical energy and that the voltage changes occurring during operation are used as control variables for the generators in the DC voltage energy bus (3).

3. The electrical energy supply system according to claim 1 or 2, **characterized in that** individual generators are set in respect of their output via different diesel engine cylinder fills (4, 5, 6) and the total output is set via the number of diesel engines (4, 5, 6) in operation.

4. The electrical energy supply system according to claim 1, 2 or 3, **characterized in that** electrical energy is supplied to or removed from the DC voltage energy bus (3) via combination units of a semiconductor switch mechanism with mechanical switch elements (9), which can guarantee a galvanic separation from the generators or drive engines (1, 2).

5. The electrical energy supply system according to claim 4, **characterized in that** the generators are connected to the intermediate circuit via DC voltage intermediate circuit converters with IGBT switch devices (9).

6. The electrical energy supply system according to claim 1, 2, 3, 4 or 5, **characterized in that** the DC voltage intermediate circuit converters (9) exhibit power capacitors, which supply the necessary exciter current for asynchronous generators, wherein groups of DC voltage intermediate circuit converters (9) are configured in an interconnectable manner.

7. The electrical energy supply system according to one or more of the claims 1 to 6, **characterized in that** the DC voltage intermediate converters (9) exhibit digital controller units for the electrical energy generator end, which exhibit a parameterisation for constant voltage generators and/or asynchronous generators.

8. The electrical energy supply system according to one or more of the preceding claims, **characterized in that** converters, preferably with IGBT switches, as well as voltage and frequency controllers, are disposed on the DC voltage energy bus (3), which facilitate self-commutation.

9. The electrical energy supply system according to one or more of the preceding claims, **characterized in that** it exhibits a DC voltage intermediate circuit, which is configured as a DC voltage energy bus that can be disconnected by a semiconductor switch (14) and extends from the bow area to the stern area of the ship.

10. The electrical energy supply system according to claim 9, **characterized in that** at least one, preferably two, transistor switches (14) are disposed in the DC voltage energy bus (3), with which the DC voltage energy bus (3) can be disconnected.

11. The electrical energy supply system according to one or more of the preceding claims, **characterized in that** the voltage intermediate converters (11) have digital controller units, which exhibit a parameterisation for a torque or speed control.

12. A ship with an electrical energy supply system according to one or more of the preceding claims, **characterized in that** it exhibits at least one shore supply, which has a voltage intermediate circuit converter (9) with IGBT switches and voltage and frequency controllers and is configured as a self-commutating converter.

13. The ship with an electrical energy supply system according to one or more of the preceding claims, **characterized in that** it exhibits an emergency power generator, which is driven by a diesel engine (7) and is connected to the DC voltage energy bus (3) via at least one voltage intermediate circuit converter.

14. The electrical energy supply system for a ship, according to one or more of the preceding claims, **characterized in that** the diesel engines (4, 5, 6, 7) are remote-controllable (start, stop, output) from the bridge (25) of the ship and the DC voltage intermediate converters (9, 11) work automatically.

15. The electrical energy supply system according to one or more of the preceding claims, **characterized in that** sub-distribution units for the on-board supply system (13) are connected to the DC voltage energy bus (3) via current converters (12).

16. The ship with an electrical energy supply system according to one or more of the preceding claims 1 to 15, **characterized in that** it is a river cruise ship.

17. The ship with an electrical energy supply system according to one or more of the preceding claims 1 to 15, **characterized in that** it is a motor yacht or a yacht-like motor sailing vessel.

18. The ship with an electrical energy supply system according to one or more of the preceding claims 1 to 15, **characterized in that** it is a coastal patrol boat or a patrol boat.

19. The ship with an electrical energy supply system according to one or more of the claims 1 to 18, characterized through the use of self-commutating DC voltage intermediate circuit converters (9, 10, 11, 12), which assume the functions of a switchboard for electrical drives and generators.

## Revendications

1. Système d'alimentation en énergie électrique, notamment destiné à des bateaux, comportant des générateurs entraînés par des moteurs diesel (4,5,6,7) et des appareils consommateurs, dans lequel un circuit intermédiaire à tension continue est disposé comme bus d'énergie (3) entre les appareils consommateurs (1,2,3) et les générateurs et dans lequel des convertisseurs de tension (11,12) pour alimenter l'appareil consommateur en tension alternative sont prévus, **caractérisé en ce que** les générateurs sont conçus comme des générateurs asynchrones, **en ce que** entre les générateurs et le circuit intermédiaire à tension continue des convertisseurs de courant (9,10) fonctionnant bidirectionnellement sont disposés et **en ce que** les convertisseurs de courant fonctionnant bidirectionnellement présentent au moins un condensateur, avec lequel l'énergie accumulée du générateur asynchrone correspondant est excitée au démarrage.

2. Système d'alimentation en énergie électrique selon la revendication 1, **caractérisé en ce que** le bus d'énergie électrique du bateau entier (20) est alimenté en énergie électrique et **en ce que** les variations de tension se produisant en fonctionnement dans le bus d'énergie à tension continue (3) servent de grandeurs de commande pour les générateurs.

3. Système d'alimentation en énergie électrique selon les revendications 1 ou 2, **caractérisé en ce que** des générateurs individuels sont réglés en ce qui concerne leur puissance sur un remplissage différent des moteurs diesel (4,5,6) et la puissance totale est réglée sur le nombre des moteurs diesel (4,5,6) se trouvant en fonctionnement.

4. Système d'alimentation en énergie électrique selon les revendications 1,2 ou 3, **caractérisé en ce que** une énergie électrique est introduite dans ou prélevée du bus d'énergie à tension continue (3) par l'intermédiaire d'unités de combinaison d'un dispositif de commutateur à semi-conducteurs avec des éléments de commutation mécaniques (9), qui peuvent garantir une séparation galvanique par rapport aux générateurs ou aux moteurs d'entraînement (1,2).

5. Système d'alimentation en énergie électrique selon la revendication 4, **caractérisé en ce que** les générateurs sont reliés par l'intermédiaire de convertisseurs de circuit intermédiaire à tension continue comportant des dispositifs de commutation IGBT (98) au circuit intermédiaire.

6. Système d'alimentation en énergie électrique selon les revendications 1,2,3,4 ou 5, **caractérisé en ce que** les convertisseurs de circuit intermédiaire à tension continue (9) présentent des condensateurs de puissance, qui délivrent le courant excitateur nécessaire pour les générateurs asynchrones, dans lequel des groupes de convertisseurs de circuit intermédiaire à tension continue (9) sont conçus de manière à pouvoir être commutés conjointement.

7. Système d'alimentation en énergie électrique selon une ou plusieurs des revendications 1 à 6, **caractérisé en ce que** le convertisseur de circuit intermédiaire à tension continue (9) présentent pour le côté de générateur d'énergie électrique des modules de réglage numériques, qui présentent un paramétrage pour les générateurs de tension constante et/ou générateurs asynchrones.

8. Système d'alimentation en énergie électrique selon une ou plusieurs des revendications précédentes, **caractérisé en ce que** sur le bus d'énergie)à tension continue (3), des convertisseurs de courant, de préférence équipés de commutateurs IGBT, ainsi que des contrôleurs de tension et de fréquence sont disposés, qui permettent une autocommutation.

9. Système d'alimentation en énergie électrique selon une ou plusieurs des revendications précédentes, **caractérisé en ce que** il présente un circuit intermédiaire de tension continue, qui est conçu comme un bus d'énergie à tension continue séparable par des commutateurs à semi-conducteurs (14) et s'étend de la zone de proue jusqu'à la zone de poupe du bateau.

10. Système d'alimentation en énergie électrique selon la revendication 9, **caractérisé en ce que** dans le bus d'énergie à tension continue (3) au moins un, de préférence deux commutateurs à transistors 14) sont disposés, avec lesquels le bus d'énergie à tension continue (3) peut être séparé.

11. Système d'alimentation en énergie électrique selon une ou plusieurs des revendications précédentes, **caractérisé en ce que** les convertisseurs de circuit intermédiaire de tension (11) présentent des modules de réglage numériques, qui présentent un paramétrage pour une régulation de couple de rotation ou de régime de rotation.

12. Bateau comportant un système d'alimentation en énergie électrique selon une ou plusieurs des revendications précédentes, **caractérisé en ce que** il présente au moins un branchement de terre, qui dispose d'un convertisseur de circuit intermédiaire de tension (9) équipé de commutateurs IGBT ainsi que des commutateurs de tension et de fréquence et est conçu comme un convertisseur de tension autocommuté.

13. Bateau comportant un système d'alimentation en énergie électrique selon une ou plusieurs des revendications précédentes, **caractérisé en ce que** il présente un générateur électrique d'urgence, qui est entraîné par un moteur diesel (7) et est raccordé par l'intermédiaire d'au moins un convertisseur de circuit intermédiaire de tension au bus d'énergie à tension continue (3).

14. Système d'alimentation en énergie électrique destiné à un bateau, selon une ou plusieurs des revendications précédentes, **caractérisé en ce que** les moteurs diesel (4,5,6,7) peuvent être commandés à distance (démarrage, arrêt, puissance) à partir des ponts (25) du bateau, et les convertisseurs à circuit intermédiaire de tension (9,11) fonctionnent automatiquement.

15. Système d'alimentation en énergie électrique selon une ou plusieurs des revendications précédentes, **caractérisé en ce que** des sous-distributions destinées au réseau de bord (13) sont raccordées par l'intermédiaire de convertisseurs de courant (12) au bus d'énergie à tension continue (3).

16. Bateau comportant un système d'alimentation en énergie électrique, selon une ou plusieurs des revendications précédentes 1 à 15, **caractérisé en ce que** il s'agit d'un bateau de croisière fluviale.

17. Bateau comportant un système d'alimentation en énergie électrique selon une ou plusieurs des revendications précédentes 1 à 15, **caractérisé en ce que** il s'agit d'un yacht à moteur ou d'un voilier à moteur similaire à un yacht.

18. Bateau comportant un système d'alimentation en énergie électrique, selon une ou plusieurs des revendications précédentes 1 à 15, **caractérisé en ce que** il s'agit d'un bateau de surveillance des côtés ou d'un bateau de patrouille.

19. Bateau comportant un système d'alimentation en énergie électrique, selon une ou plusieurs des revendications 1 à 18, **caractérisé par** l'utilisation de convertisseurs de circuit intermédiaire à tension continue (9,10,11,12), qui assument les tâches d'un tableau de commande pour entraînements électriques et générateurs.
